# EUROPEAN PATENT SPECIFICATION

(11) **EP 3 177 072 B1**
(45) Date of publication and mention of the grant of the patent: **03.10.2018**
(21) Application number: 14897975.0
(22) Date of filing: 23.07.2014
(51) Int. Cl.: H04W 36/02, H04W 36/14, H04L 1/16, H04W 36/00

(54) **DATA PACKET SENDING AND DATA PROCESSING DEVICES AND METHODS**
VERFAHREN UND VORRICHTUNG ZUR DATENPAKETSENDUNG UND DATENVERARBEITUNG
DISPOSITIFS ET PROCÉDÉS D'ENVOI DE PAQUET DE DONNÉES ET DE TRAITEMENT DE DONNÉES

(43) Date of publication of application: 07.06.2017
(73) Proprietor: Huawei Technologies Co. Ltd., Shenzhen, Guangdong 518129 (CN)
(72) Inventor: XIONG, Chunshan, Shenzhen Guangdong 518129 (CN); WEI, Anni, Shenzhen Guangdong 518129 (CN)
(74) Representative: Thun, Clemens
(86) International application number: PCT/CN2014/082838
(87) International publication number: WO 2016/011624

(56) References cited:
- CN-A- 101 675 684
- CN-A- 102 802 215
- CN-A- 102 833 808
- US-A1- 2008 186 920
- US-A1- 2014 064 249
- US-A1- 2015 296 418
- US-B1- 6 208 620

## Description

### TECHNICAL FIELD

The present invention relates to the field of mobile communications technologies, and in particular, to a data packet sending apparatus and method and a data processing apparatus and method.

### BACKGROUND

In the prior art, during interaction between a client and a server, intermediate forwarding is sometimes performed by using a network proxy.

For example, US 2014/0064249A1 refers to a method and apparatus for supporting a handover through the Internet. A source proxy performs receiving, through an eNB from a UE, a connection request to a server, establishing a first TCP session with an anchor proxy designated for the server, and transferring data received from the server through the first TCP session, receiving a handover preparation notification including an IP address of the UE from the eNB, as the UE is handed over to a target eNB; transferring session information associated with the first TCP session and information associated with a target proxy related with the target base station; transferring, to the target proxy, the session information associated with the first TCP session, and when a handover start notification is received from the eNB, freezing the first TCP session, and transferring, to the target proxy, state information associated with data being transmitted through the first TCP session.

Further, US 2008/0186920A1 refers to techniques to support handover of a terminal from a source base station to a target base station. In one design, a determination is made whether a change in personality is requested by the terminal. If the answer is 'Yes', then the personality of the terminal may be switched by sending one or more appropriate messages. The connection and RLP for the terminal may be reset due to the change in personality. A buffer of data reported by the source base station as being served to the terminal (e.g., no NAK was sent) may be saved by a BSC/PCF. The buffer of data may be sent to the target base station when handover occurs. New data may thereafter be sent to the target base station. This buffer of duplicate data may avoid both loss of data and retransmission timeout by TCP during the handover.

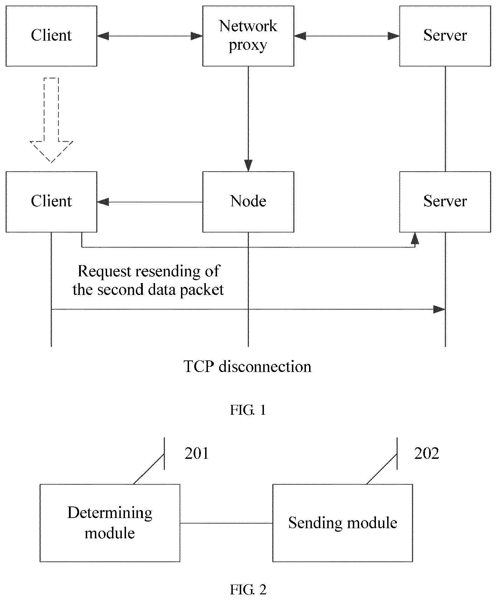

For example, as shown in FIG. 1, in a source network, data is transmitted between a client and a server (Server) by using a network proxy (Network Proxy). When a speed of transmitting data between the server and the network proxy is higher than a speed of transmitting data between the network proxy and the client, some data is cached on the network proxy within a particular time.

In a communication process, some data sent to user equipment by the server is often cached on the network proxy, and when receiving the data, the network proxy sends response acknowledgment to the server on behalf of the client. As shown in FIG. 1, for example, three data packets are cached on the network proxy, and an acknowledgement response is sent to the server by using a TCP (Transmission Control Protocol, transmission control protocol)/IP (Internet Protocol, internet protocol) connection between the network proxy and the server. A node in FIG. 1 may refer to a network proxy or may refer to another node.

In this case, because of movement of the client, the client is handed over from the source network to a target network. Therefore, the network proxy in the source network needs to forward data cached on the network proxy to the target network. In a data forwarding (data forwarding) process, a data loss may be caused sometimes.

After finding data is lost, the client requests the server to resend the data. However, in the source network, the network proxy has sent, to the server, the acknowledgement response related to receiving the data packet, and the server does not resend the data packet. When receiving no data packet, the client repeatedly requests the server to retransmit the data packet, and according to stipulation in the TCP protocol, a TCP disconnection is consequently caused. In the prior art, there is no better solution to this problem.

### SUMMARY

Embodiments of the present invention provide a data packet sending apparatus according to independent claim 1 and a data packet sending method according to independent claim 3. The invention is set out in the appended set of claims. The embodiments and/or examples of the following description which are not covered by the appended claims are considered as not being part of the present invention.

In a first aspect a data packet sending apparatus is provided, wherein the apparatus is configured to hand over a user equipment, UE, from a source network to a target network, wherein the apparatus is in the source network, wherein the apparatus comprises:
- a determining module, configured to determine a locally cached data packet when the UE is handed over from the source network to the target network; and
- a sending module, configured to:
   ∘ in a first alternative, obtain at least two cached data packets by replicating the locally cached data packet and send the at least two cached data packets to the target network or,
   ∘ in a second alternative instead of the first alternative, send the locally cached data packet to the target network at least twice, so as to send the at least two cached data packets to the target network.

In a first implementation form of the first aspect the sending module is specifically configured to: send the at least two cached data packets to a target network proxy, or send the at least two cached data packets to a target radio access network RAN.

In a second aspect a data packet sending method is provided and performed by a data packet sending apparatus in a source network, wherein the method is used for handing over an UE from the source network to a target network, the method comprises:
- determining a locally cached data packet when the UE is handed over from the source network to the target network;
- in a first alternative, obtaining at least two cached data packets by replicating the locally cached data packet and sending the at least two cached data packets to the target network or,
- in a second alternative instead of the first alternative, sending the locally cached data packet to the target network at least twice, so as to send the at least two cached data packets to the target network.

In the embodiments of the present invention, when sending a cached data packet to a target network, a source network proxy sends at least two cached data packets to the target network, which increases a sending quantity, that is, a case in which a data packet may be lost is fully considered, so as to ensure as much as possible that the target network receives all data packets. In this way, the target network requests the server to retransmit data is avoided as much as possible. For example, if a retransmission mechanism-based transfer protocol is a TCP/IP protocol, a TCP disconnection is avoided as much as possible, and service transmission continuity is ensured.

### BRIEF DESCRIPTION OF DRAWINGS

FIG. 1 is a schematic diagram of transmitting data between a client and a server by using a network proxy in the prior art.
FIG. 2 is a main structural block diagram of a first type of data packet sending apparatus according to an embodiment of the present invention;
FIG. 3 is a schematic diagram of a working scenario of UE according to an embodiment of the present invention;
FIG. 4 is a first type of interaction flowchart of data packet sending according to an embodiment of the present invention;
FIG. 5 is a second type of interaction flowchart of data packet sending according to an embodiment of the present invention;
FIG. 6 is a main structural block diagram of a data processing apparatus according to an embodiment of the present invention;
FIG. 7 is a main structural block diagram of a second type of data packet sending apparatus according to an embodiment of the present invention;
FIG. 8 is a schematic diagram of another working scenario of UE according to an embodiment of the present invention;
FIG. 9 is a third type of interaction flowchart of data packet sending according to an embodiment of the present invention;
FIG. 10 is a fourth type of interaction flowchart of data packet sending according to an embodiment of the present invention;
FIG. 11 is a main schematic structural diagram of a first type of data packet sending apparatus according to an embodiment of the present invention;
FIG. 12 is a main schematic structural diagram of a data processing apparatus according to an embodiment of the present invention;
FIG. 13 is a main schematic structural diagram of a second type of data packet sending apparatus according to an embodiment of the present invention;
FIG. 14 is a main flowchart of a first type of data packet sending method according to an embodiment of the present invention;
FIG. 15 is a main flowchart of a data processing method according to an embodiment of the present invention; and
FIG. 16 is a main flowchart of a second type of data packet sending method according to an embodiment of the present invention.

### DESCRIPTION OF EMBODIMENTS

A data packet sending apparatus in embodiments of the present invention is configured to hand over user equipment UE from a source network to a target network. The apparatus is in the source network, and a retransmission mechanism-based transfer protocol is applied to both a connection between the UE and the apparatus and a connection between the apparatus and the server. The apparatus may include: a determining module, configured to determine a locally cached data packet when the UE is handed over from the source network to the target network; and a sending module, configured to send at least two cached data packets to the target network.

In the embodiments of the present invention, when sending a cached data packet to the target network, a source network proxy sends at least two cached data packets to the target network, which increases a sending quantity, that is, a case in which a data packet may be lost is fully considered, so as to ensure as much as possible that the target network receives all data packets. In this way, a case in which the target network requests the server to retransmit data is avoided as much as possible. For example, if the retransmission mechanism-based transfer protocol is a TCP/IP protocol, a TCP disconnection is avoided as much as possible, and service transmission continuity is ensured.

Technologies described in this specification may be applied to various communications systems, for example, current 2G and 3G communications systems and a next-generation communications system, for example, a Global System for Mobile Communications (Global System for Mobile communications, GSM), a Code Division Multiple Access (Code Division Multiple Access, CDMA) system, a Time Division Multiple Access (Time Division Multiple Access, TDMA) system, Wideband Code Division Multiple Access (Wideband Code Division Multiple Access Wireless, WCDMA), a Frequency Division Multiple Access (Frequency Division Multiple Addressing, FDMA) system, an Orthogonal Frequency-Division Multiple Access (Orthogonal Frequency-Division Multiple Access, OFDMA) system, a single-carrier FDMA (SC-FDMA) system, a general packet radio service (General Packet Radio Service, GPRS) system, a Long Term Evolution (Long Term Evolution, LTE) system, and other communications systems.

In addition, the terms "system" and "network" may be used interchangeably in this specification. The term "and/or" in this specification describes only an association relationship for describing associated objects and represents that three relationships may exist. For example, A and/or B may represent the following three cases: Only A exists; both A and B exist; and only B exists. In addition, the character "/" in this specification generally indicates an "or" relationship between the associated objects, unless otherwise specified.

In all embodiments of the present invention, a retransmission mechanism-based transfer protocol may refer to TCP/IP, or may refer to SCTP (Stream Control Transmission Protocol, Stream Control Transmission Protocol).

The following further describes the embodiments of the present invention in detail with reference to accompanying drawings in this specification.

Referring to FIG. 2, an embodiment of the present invention provides a data packet sending apparatus, where the apparatus may be configured to hand over UE (User Equipment, user equipment) from a source network to a target network, the apparatus is in the source network, and a retransmission mechanism-based transfer protocol is applied to both a connection between the UE and the apparatus and a connection between the apparatus and the server. The apparatus may include a determining module 201 and a sending module 202. The apparatus may, for example, refer to a source network proxy.

The determining module 201 is configured to determine a locally cached data packet when the UE is handed over from the source network to the target network.

The sending module 202 is configured to send at least two cached data packets to the target network.

In this embodiment of the present invention, there is a network proxy that may be referred to as the source network proxy in the source network. When the UE works in the source network, information is transited between the UE and the server by using the source network proxy.

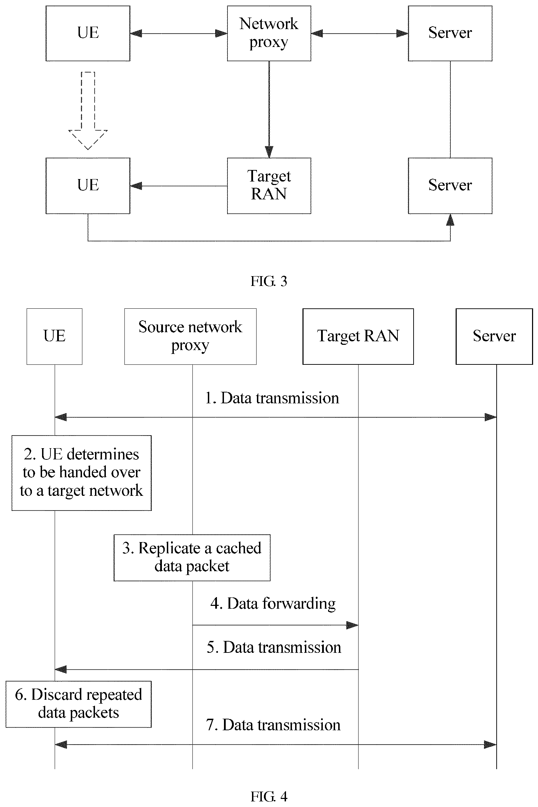

Referring to FIG. 3, FIG. 3 is a schematic diagram of a working scenario of the UE. A target RAN (Radio Access Network, radio access network) in FIG. 3 may be referred to as a target node, for example, may specifically refer to a node such as an eNB (eNodeB, eNodeB), an RNC (Radio Network Controller, radio network controller), or a BSC (Base Station Controller, base station controller). In FIG. 3, after the UE is handed over to the target network, because there is no network proxy in the target network, data communication between the UE and the server does not need forwarding by a network proxy. A dash line in FIG. 3 indicates movement of the UE. In this embodiment of the present invention, the retransmission mechanism-based transfer protocol is applied to both a connection between the UE and a network proxy and a connection between the network proxy and the server. In the embodiment of FIG. 3, a TCP/IP protocol is used as an example of the retransmission mechanism-based transfer protocol.

When the UE works in the source network, the source network proxy sends an acknowledgement response to the server after receiving data sent by the server.

When the UE works in the source network, some data is cached in the source network proxy within a particular time when a speed of transmitting data between the server and the source network proxy is higher than a speed of transmitting data between the source network proxy and the UE.

Therefore, when the UE is handed over from the source network to the target network, the source network proxy needs to send cached data to the UE. In this embodiment of the present invention, these data packets are referred to as a cached data packet.

Optionally, in this embodiment of the present invention, the sending module 202 is specifically configured to: obtain the at least two cached data packets by replicating the cached data packet, and send the at least two data packets to the target network; or send the cached data packet to the target network at least twice, so as to send the at least two cached data packets to the target network.

That is, the sending module 202 may send the at least two cached data packets to the target network by using different methods. For example, the sending module 202 may replicate the locally cached data packet to obtain the at least two cached data packets, and then send the at least two cached data packets to the target network. Alternatively, for example, the sending module 202 may send the cached data packet to the target network at least twice, so that in a case of no packet loss, the target network can receive one cached data packet each time, that is, the target network can receive the at least two cached data packets.

If the sending module 202 first replicates and then sends the cached data packet, for the source network proxy, data obtained after the replication cannot be distinguished from previous data, that is, both the data obtained after the replication and the previous data are to-be-sent data regardless of whether the two pieces of data are same data, and during sending, the two pieces of data are corresponding to different sequence numbers in a transfer protocol GTP (General Packet Radio Service Tunneling Protocol, general packet radio service tunneling protocol).

If the sending module 202 sends the cached data packet twice, the source network proxy knows that two same pieces of to-be-sent data are sent, and during sending, the two pieces of data may be corresponding to same or different sequence numbers in a transfer protocol GTP.

No matter which sending method is used, a purpose is to enable the target network to receive the cached data packet and a backup. In this way, even if a data packet is lost in a transmission process, because the backup is sent, a possibility of a case in which information received by the target network is incomplete is reduced.

Optionally, in this embodiment of the present invention, the sending module 202 is specifically configured to: send the at least two cached data packets to a target network proxy, or send the at least two cached data packets to the target RAN.

Optionally, in this embodiment of the present invention, if the sending module 202 sends the at least two cached data packets to the target network proxy, the target network proxy may send the at least two cached data packets to the UE, and after receiving the at least two cached data packets, the UE may discard repeated data packets in the at least two cached data packets, so as to avoid data redundancy and save storage space of the UE. Alternatively, after receiving the at least two data packets, the sending module 202 may discard repeated data packets in the at least two cached data packets, and then send a remaining cached data packet to the UE, so that the UE itself does not need to perform an operation, and the UE can directly use the cached data packet after receiving the cached data packet.

Optionally, in this embodiment of the present invention, if the sending module 202 sends the at least two cached data packets to the target RAN, the target RAN may send the at least two cached data packets to the UE, and after receiving the at least two cached data packets, the UE may discard repeated data packets in the at least two cached data packets, so as to avoid data redundancy and save storage space of the UE.

That is, in this embodiment, there may be a network proxy in the target network, or there may be no network proxy in the target network. FIG. 3 shows an example of a case in which there is no network proxy in the target network.

Referring to FIG. 4, FIG. 4 is an interaction flowchart of the data packet sending, and an introduction is as follows: FIG. 4 also shows a case in which there is no network proxy in the target network. In an embodiment of FIG. 4, a TCP/IP protocol is used as an example of the retransmission mechanism-based transfer protocol.

A serial number 1 in FIG. 4 indicates that when the UE works in the source network, data can be transmitted between the UE and the server based on the retransmission mechanism-based transfer protocol by using the source network proxy.

A serial number 2 indicates that the UE determines to be handed over from the source network to the target network.

A serial number 3 indicates that the source network proxy determines the locally cached data packet and replicates the cached data packet. It may be learned that in an example of the embodiment of FIG. 4, the source network proxy replicates the locally cached data packet.

A serial number 4 indicates that the source network proxy sends the at least two cached data packets to the target RAN, and this process is also referred to as data forwarding. In this embodiment of the present invention, data may be forwarded by the source network proxy to the target RAN by using a GTP-U (General Packet Radio Service Tunneling Protocol over User Datagram Protocol, general packet radio service tunneling protocol over user datagram protocol) protocol. Repeated data may be encapsulated in packets with different GTP-U sequence numbers, or may be encapsulated in packets with a same GTP-U sequence number.

A serial number 5 indicates that the target network sends all the received at least two cached data packets to the UE.

A serial number 6 indicates that after receiving the at least two cached data packets, the UE may discard the repeated data packets in the at least two cached data packets, to avoid data redundancy and save storage space.

A serial number 7 indicates that data can be normally transmitted between the UE and the server in the target network based on the retransmission mechanism-based transfer protocol.

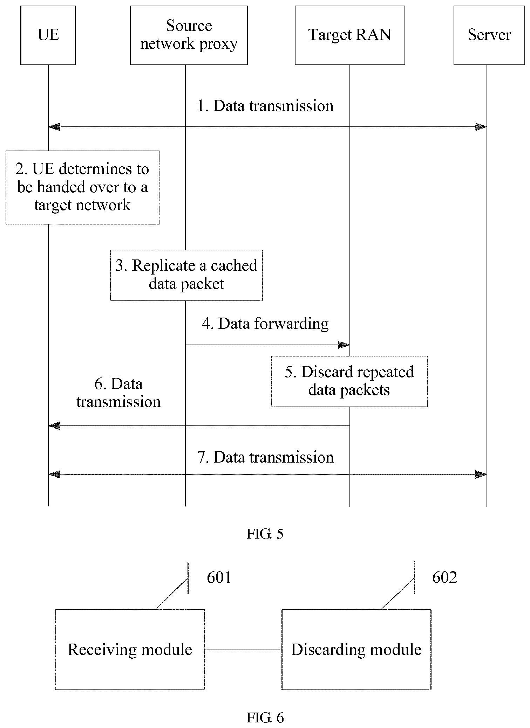

Referring to FIG. 5, FIG. 5 is an interaction flowchart of the data packet sending, and an introduction is as follows: FIG. 5 shows an example of a case in which there is a network proxy in the target network. In an embodiment of FIG. 5, a TCP/IP protocol is used as an example of the retransmission mechanism-based transfer protocol.

A serial number 1 in FIG. 5 indicates that when the UE works in the source network, data can be transmitted between the UE and the server based on the retransmission mechanism-based transfer protocol by using the source network proxy.

A serial number 2 indicates that the UE determines to be handed over from the source network to the target network.

A serial number 3 indicates that the source network proxy determines the locally cached data packet and replicates the cached data packet. It may be learned that in an example of the embodiment of FIG. 5, the source network proxy replicates the locally cached data packet.

A serial number 4 indicates that the source network proxy sends the at least two cached data packets to the target network proxy, and this process is also referred to as data forwarding. In this embodiment of the present invention, data may be forwarded by the source network proxy to the target network proxy by using a GTP-U protocol. Repeated data may be encapsulated in packets with different GTP-U sequence numbers, or may be encapsulated in packets with a same GTP-U sequence number.

A serial number 5 indicates that the target network proxy discards the repeated data packets in the received at least two data packets. It may be learned that in an example of the embodiment of FIG. 5, the target network proxy discards the repeated data packets.

A serial number 6 indicates that the target network proxy sends a remaining cached data packet to the UE.

A serial number 7 indicates that data can be normally transmitted between the UE and the server in the target network based on the retransmission mechanism-based transfer protocol.

Referring to FIG. 6, based on a same invention concept, an embodiment of the present invention provides a data processing apparatus, where the apparatus is configured to hand over UE from a source network to a target network, there is a source network proxy in the source network, and a retransmission mechanism-based transfer protocol is applied to both a connection between the UE and the source network proxy and a connection between the source network proxy and the server. The apparatus may include a receiving module 601 and a discarding module 602. The data processing apparatus may refer to a target network proxy in the target network, or the data processing apparatus may refer to the UE.

The receiving module 601 is configured to receive at least two cached data packets sent by the source network proxy.

The discarding module 602 is configured to discard repeated data packets in the at least two cached data packets.

That the receiving module 601 receives the at least two cached data packets sent by the source network proxy may refer to receiving, by the target network proxy, the at least two cached data packets sent by the source network proxy, or may refer to receiving, by the UE, the at least two cached data packets sent by the target network proxy, or may refer to receiving, by the UE, the at least two cached data packets sent by a target RAN. That is, the apparatus may refer to the target network proxy, or may refer to the UE.

If that the receiving module 601 receives the at least two cached data packets sent by the source network proxy specifically refers to receiving, by the target network proxy, the at least two cached data packets sent by the source network proxy, that the discarding module 602 discards the repeated data packets in the at least two cached data packets refers to discarding, by the target network proxy, the repeated data packets in the at least two cached data packets. That is, in this case, it is the target network proxy that discards the repeated data packets. For a specific flowchart, reference may be made to FIG. 5.

If that the receiving module 601 receives the at least two cached data packets sent by the source network proxy specifically refers to receiving, by the UE, the at least two cached data packets sent by the target network proxy, or refers to receiving, by the UE, the at least two cached data packets sent by the target RAN, that the discarding module 602 discards the repeated data packets in the at least two cached data packets refers to discarding, by the UE, the repeated data packets in the at least two cached data packets. If that the receiving module 601 receives the at least two cached data packets sent by the source network proxy specifically refers to receiving, by the UE, the at least two cached data packets sent by the target network proxy, in this case, the target network proxy does not process the repeated data packets, and it is the UE that discards the repeated data packets.

In addition, if that the receiving module 601 receives the at least two cached data packets sent by the source network proxy specifically refers to receiving, by the UE, the at least two cached data packets sent by the target RAN, that the discarding module 602 discards the repeated data packets in the at least two cached data packets refers to discarding, by the UE, the repeated data packets. For a specific flowchart, reference may be made to FIG. 4.

Optionally, in this embodiment of the present invention, the discarding module 602 is specifically configured to: determine the repeated data packets in the at least two cached data packets, and discard the repeated packets.

Optionally, in this embodiment of the present invention, if the apparatus is the target network proxy, the apparatus may further include a sending module, configured to send a remaining cached data packet to the UE after the discarding module 602 discards the repeated packets in the at least two cached data packets, which means that if it is the target network proxy that discards the repeated data packets in the at least two cached data packets, the target network proxy further needs to send a processed cached data packet to the UE.

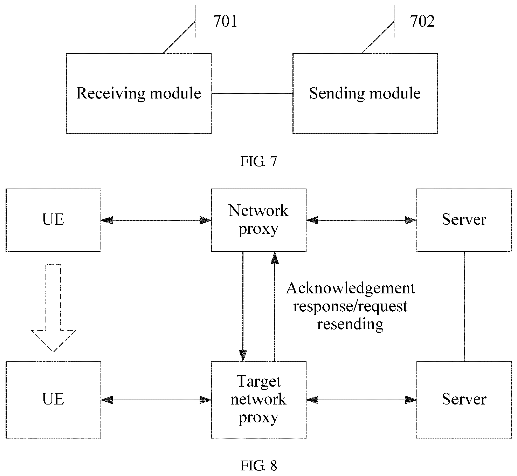

Referring to FIG. 7, based on a same invention concept, an embodiment of the present invention provides a data packet sending apparatus, where the apparatus is configured to hand over UE from a source network to a target network, there is a source network proxy in the source network, and a retransmission mechanism-based transfer protocol is applied to both a connection between the UE and the source network proxy and a connection between the source network proxy and the server. The apparatus may include a receiving module 701 and a sending module 702. The apparatus may refer to the UE, or the apparatus may refer to a target network proxy in the target network.

The receiving module 701 is configured to: when the UE is handed over from the source network to the target network, receive a cached data packet sent by the source network proxy.

The sending module 702 is configured to send a resending request to the source network proxy if there is a lost cached data packet, and the resending request is used to instruct the source network proxy to resend the lost cached data packet.

The source network proxy sends a locally cached data packet to the target network when the UE is handed over from the source network to the target network. Similarly, the source network proxy may send the locally cached data packet to the target network proxy, that is, the apparatus may be the target network proxy. Alternatively, in a case in which there is no target network proxy in the target network, the source network proxy may send the locally cached data packet to the target RAN, and the target RAN directly forwards the received data packet to the UE, which is equivalent to that the UE receives the cached data packet sent by the source network proxy, that is, the apparatus may be the UE.

Referring to FIG. 8, FIG. 8 is a schematic diagram of a working scenario of the UE. A dash line in FIG. 8 indicates movement of the UE. In FIG. 8, the source network proxy sends data to the target network proxy, and the target network proxy sends, to the source network proxy, an acknowledgement response and a message for requesting resending of a cached data packet. In this embodiment of the present invention, the retransmission mechanism-based transfer protocol is applied to both a connection between the UE and a network proxy and a connection between the network proxy and the server. In an embodiment of FIG. 8, a TCP/IP protocol is used as an example of the retransmission mechanism-based transfer protocol.

Optionally, in this embodiment of the present invention, the sending module 702 is specifically configured to: determine whether there is a lost cached data packet, and send a resending request to the source network proxy if there is a lost cached data packet.

Optionally, in this embodiment of the present invention, that the sending module 702 is specifically configured to determine whether there is a lost cached data packet is specifically: determining, according to sequence numbers that are in the retransmission mechanism-based transfer protocol and that are separately corresponding to cached data packets, whether there is a lost cached data packet. For example, if the retransmission mechanism-based transfer protocol is the TCP/IP protocol, a sequence number in the retransmission mechanism-based transfer protocol may be a TCP sequence number. If the retransmission mechanism-based transfer protocol is an SCTP protocol, a sequence number in the retransmission mechanism-based transfer protocol may be an SCTP sequence number.

In this embodiment of the present invention, in a data forwarding process, the source network proxy may mark the last to-be-forwarded cached data packet with an "end mark (end mark)" to mark the data packet as the last data packet in data forwarding.

The sending module 702 determines, according to the "end mark" and a sequence number that is in the retransmission mechanism-based transfer protocol and that is of a received data packet, whether a data packet is lost. For example, a sequence number that is in the retransmission mechanism-based transfer protocol and that is of the first sent cached data packet is 01, a sequence number that is in the retransmission mechanism-based transfer protocol and that is of the second sent cached data packet is 02, and a sequence number that is in the retransmission mechanism-based transfer protocol and that is of the third sent cached data packet is 03. If the third sent data packet is the last data packet in data forwarding, the source network proxy marks the third sent data packet with an "end mark".

In this way, the sending module 702 may determine, according to whether a received cached data packet has an "end mark", whether all cached data packets are received, and the sending module 702 may determine, according to a sequence number that is in the retransmission mechanism-based transfer protocol and that is of a received cached data packet, whether there is a lost data packet.

For example, totally three cached data packets need to be sent, and are separately a cached data packet 1, a cached data packet 2, and a cached data packet 3. A sequence number that is in the retransmission mechanism-based transfer protocol and that is of the cached data packet 1 is 01, a sequence number that is in the retransmission mechanism-based transfer protocol and that is of the cached data packet 2 is 02, and a sequence number that is in the retransmission mechanism-based transfer protocol and that is of the cached data packet 3 is 03. Because the cached data packet 3 is the last cached data packet, the source network proxy may make the cached data packet 3 carry an "end mark".

After receiving the data packet whose sequence number in the retransmission mechanism-based transfer protocol is 01, and the data packet whose sequence number in the retransmission mechanism-based transfer protocol is 03 and that carries an "end mark", and if after specified duration, the receiving module 701 still does not receive the data packet whose sequence number in the retransmission mechanism-based transfer protocol is 02, the sending module 702 may determine that the data packet whose sequence number in the retransmission mechanism-based transfer protocol is 02 is lost.

Similarly, if after the specified duration, the receiving module 701 still does not receive the data packet carrying an "end mark", it is considered that the data packet carrying an "end mark" is lost, and requests resending of the data packet carrying an "end mark". It is assumed that among all data packets in the data forwarding that are received by the receiving module 701, a largest sequence number in the retransmission mechanism-based transfer protocol is n, it may be inferred that a sequence number that is in the retransmission mechanism-based transfer protocol and that is of the data packet carrying an "end mark" may be n+1. If the received resent data packet whose sequence number in the retransmission mechanism-based transfer protocol is n+1 carries no "end mark", the sending module 702 may continue to request resending of a data packet whose sequence number in the retransmission mechanism-based transfer protocol is n+2. By analogy, the sending module 702 does not stop requesting until the receiving module 701 receives a data packet carrying an "end mark".

Optionally, in this embodiment of the present invention, if the apparatus is the target network proxy, the sending module 702 is further configured to: after determining whether there is a lost cached data packet, send an acknowledgement response to the source network proxy if there is no lost cached data packet, which means that if the apparatus is the target network proxy, the target network proxy may send the acknowledgement response to the source network proxy when determining that there is no lost cached data packet, so as to notify the source network proxy that an entire sending process may be ended.

Optionally, in this embodiment of the present invention, if the apparatus is the target network proxy, the sending module 702 is further configured to: after determining whether there is a lost cached data packet, send the received cached data packet to the UE if there is no lost cached data packet, which means that if the apparatus is the target network proxy, when determining that there is no lost cached data packet, the target network proxy may send the received cached data packet to the UE.

In this embodiment of the present invention, if the apparatus is the target network proxy, the sending module 702 sends the acknowledgement response to the source network proxy, and the sending module 702 sends the received cached data packet to the UE, where a sequence for executing the two processes during execution is not limited.

Optionally, in this embodiment of the present invention, if the apparatus is the UE, the sending module 702 is further configured to: send an acknowledgement response to the source network proxy after the receiving module 701 receives the cached data packet sent by the source network proxy, or after it is determined that there is no lost cached data packet, which means that if the apparatus is the UE, when determining that there is no lost cached data packet, the UE may send the acknowledgement response to the source network proxy, or after receiving the cached data packet sent by the source network proxy, the UE may send the acknowledgement response to the source network proxy.

If the apparatus is the UE, when sending the resending request and sending the acknowledgement response to the source network proxy, the UE performs forwarding by using the target RAN or the target network proxy.

For example, the apparatus is the UE, and the retransmission mechanism-based transfer protocol is the TCP/IP protocol. If the source network proxy sends three data packets, and the second data packet among the three data packets is lost, according to a solution in the prior art, after finding that the second data packet is lost, the UE requests the server to resend the second data packet. However, because in the source network, the source network proxy has already sent, to the server, response acknowledgement acknowledging that the second data packet is received, the server considers that the UE has acknowledged receiving of the second data packet. In this case, according to stipulation in the TCP/IP protocol, the server cannot retransmit the second data packet. However, because the UE does not receive the second data packet, the UE repeatedly requests retransmission, and according to stipulation in the TCP/IP protocol, a TCP disconnection is caused. However, according to the technical solution in this embodiment of the present invention, if the UE requests, after finding that the second data is lost, the source network proxy instead of the server to resend the second data, the source network proxy can definitely resend the second data packet to the UE, so that a possible TCP disconnection is avoided as much as possible, and data transmission continuity is ensured.

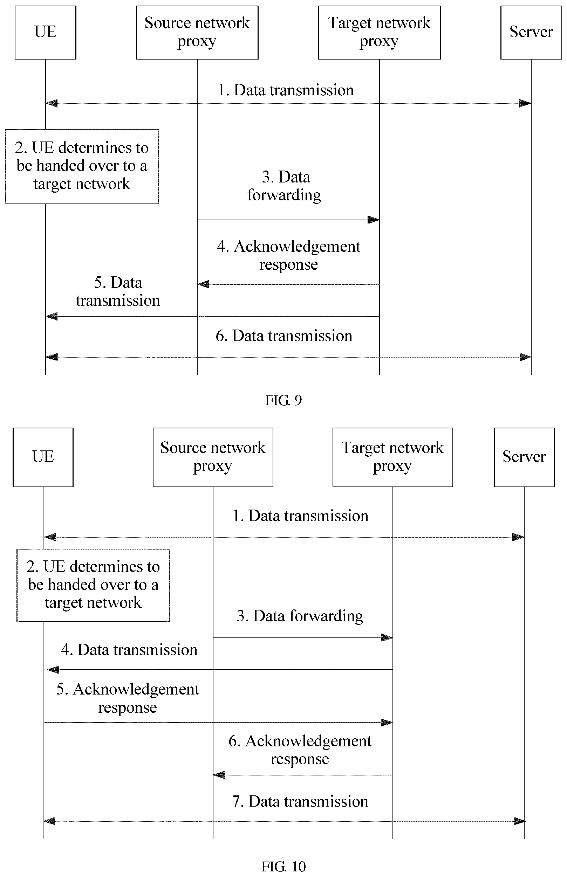

Referring to FIG. 9, FIG. 9 is an interaction flowchart of the data packet sending, and an introduction is as follows: In an example of FIG. 9, the apparatus is the target network proxy. In an embodiment of FIG. 9, a TCP/IP protocol is used as an example of the retransmission mechanism-based transfer protocol.

A serial number 1 in FIG. 9 indicates that when the UE works in the source network, data can be transmitted between the UE and the server based on the retransmission mechanism-based transfer protocol by using the source network proxy.

A serial number 2 indicates that the UE determines to be handed over from the source network to the target network.

A serial number 3 indicates that the source network proxy sends the locally cached data packet to the target network proxy, and this process is also referred to as data forwarding. In this embodiment of the present invention, data may be forwarded by the source network proxy to the target network proxy by using a GTP-U protocol. Repeated data may be encapsulated in packets with different GTP-U sequence numbers, or may be encapsulated in packets with a same GTP-U sequence number.

A serial number 4 indicates that the target network proxy sends the acknowledgement response to the source network proxy when determining that no cached data packet is lost.

A serial number 5 indicates that the target network proxy sends the received cached data packet to the UE.

A serial number 6 indicates that data can be normally transmitted between the UE and the server in the target network based on the retransmission mechanism-based transfer protocol.

In this embodiment, in addition to a downlink tunnel specified in the prior art, an extra uplink tunnel needs to be added between the source network proxy and the target network proxy to implement cached data packet acknowledgement, that is, the target network proxy needs to send the acknowledgement response to the source network proxy by using the added uplink tunnel. In addition, after the UE completes the handing over, the uplink and downlink tunnels between the source network proxy and the target network proxy are not released until the source network proxy receives an acknowledgement response for a cached data packet that is sent by the target network proxy and that carries an "end mark".

Referring to FIG. 10, FIG. 10 is an interaction flowchart of the data packet sending, and an introduction is as follows: In an example of FIG. 10, the apparatus is the UE, and there is the target network proxy in the target network. In an embodiment of FIG. 10, a TCP/IP protocol is used as an example of the retransmission mechanism-based transfer protocol.

A serial number 1 in FIG. 10 indicates that when the UE works in the source network, data can be transmitted between the UE and the server based on the retransmission mechanism-based transfer protocol by using the source network proxy.

A serial number 2 indicates that the UE determines to be handed over from the source network to the target network.

A serial number 3 indicates that the source network proxy sends the locally cached data packet to the target network proxy, and this process is also referred to as data forwarding. In this embodiment of the present invention, data may be forwarded by the source network proxy to the target network proxy by using a GTP-U protocol. Repeated data may be encapsulated in packets with different GTP-U sequence numbers, or may be encapsulated in packets with a same GTP-U sequence number.

A serial number 4 indicates that the target network proxy sends the received cached data packet to the UE.

A serial number 5 indicates that when determining that no cached data packet is lost, the UE sends the acknowledgement response to the target network proxy, so as to forward the acknowledgement response to the source network proxy by using the target network proxy.

A serial number 6 indicates that the target network proxy forwards, to the source network proxy, the received acknowledgement response sent by the UE.

A serial number 7 indicates that data can be normally transmitted between the UE and the server in the target network based on the retransmission mechanism-based transfer protocol.

In the step shown by the serial number 6, by parsing an acknowledgement response that is for a cached data packet carrying an "end mark", the target network proxy may determine that the UE sends, to the source network proxy, the acknowledgement response that is for the cached data packet carrying the "end mark" and an acknowledgement response that is for a cached data packet before the cached data packet carrying the "end mark".

In this embodiment, in addition to a downlink tunnel specified in the prior art, an extra uplink tunnel needs to be added between the source network proxy and the target network proxy to implement cached data packet acknowledgement, that is, the target network proxy needs to send the acknowledgement response to the source network proxy by using the added uplink tunnel. In addition, after the UE completes the handing over, the uplink and downlink tunnels between the source network proxy and the target network proxy are not released until the source network proxy receives an acknowledgement response for a cached data packet that is sent by the target network proxy and that carries an "end mark".

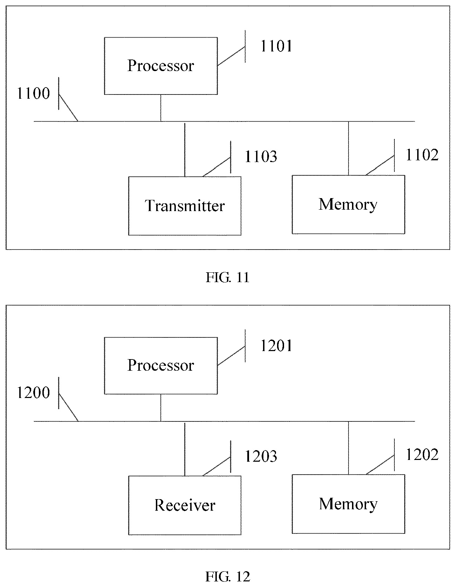

Referring to FIG. 11, based on a same invention concept, an embodiment of the present invention provides a data packet sending apparatus, where the apparatus is configured to hand over UE from a source network to a target network, the apparatus is in the source network, and a retransmission mechanism-based transfer protocol is applied to both a connection between the UE and the apparatus and a connection between the apparatus and the server. The apparatus may include a processor 1101, a memory 1102, and a transmitter 1103 that are connected to a same bus 1100. The memory 1102 is configured to store an instruction required by the processor 1101 for executing a program. The processor 1101 is configured to read the instruction stored in the memory 1102 to perform the following method: determining a locally cached data packet when the UE is handed over from the source network to the target network. The transmitter 1103 is configured to send at least two cached data packets to the target network. The apparatus may, for example, refer to the source network proxy.

Optionally, in this embodiment of the present invention, the processor 1101 is further configured to obtain the at least two cached data packets by replicating the cached data packet, and the transmitter 1103 is specifically configured to send the at least two data packets to the target network. Alternatively, the transmitter 1103 is specifically configured to send the cached data packet to the target network at least twice, so as to send the at least two cached data packets to the target network.

Optionally, in this embodiment of the present invention, the transmitter 1103 is specifically configured to: send the at least two cached data packets to a target network proxy, or send the at least two cached data packets to a target RAN.

Optionally, in this embodiment of the present invention, the target RAN is an eNodeB, an RNC, or a BSC.

Referring to FIG. 12, based on a same invention concept, an embodiment of the present invention provides a data processing apparatus, where the apparatus is configured to hand over UE from a source network to a target network, there is a source network proxy in the source network, and a retransmission mechanism-based transfer protocol is applied to both a connection between the UE and the source network proxy and a connection between the source network proxy and the server. The apparatus may include a processor 1201, a memory 1202, and a receiver 1203 that are connected to a same bus 1200. The memory 1202 is configured to store an instruction required by the processor 1201 for executing a program. The receiver 1203 is configured to receive at least two cached data packets sent by the source network proxy. The processor 1201 is configured to read the instruction stored in the memory 1202 to perform the following method: discarding repeated data packets in the at least two cached data packets. The data processing apparatus may refer to a target network proxy in the target network, or the data processing apparatus may refer to the UE.

Optionally, in this embodiment of the present invention, the processor 1201 is specifically configured to: determine the repeated data packets in the at least two cached data packets, and discard the repeated packets.

Optionally, in this embodiment of the present invention, if the apparatus is the target network proxy in the target network, the apparatus further includes a transmitter connected to the bus 1200, and the transmitter is configured to send a remaining cached data packet to the UE after the processor 1201 discards the repeated packets in the at least two cached data packets.

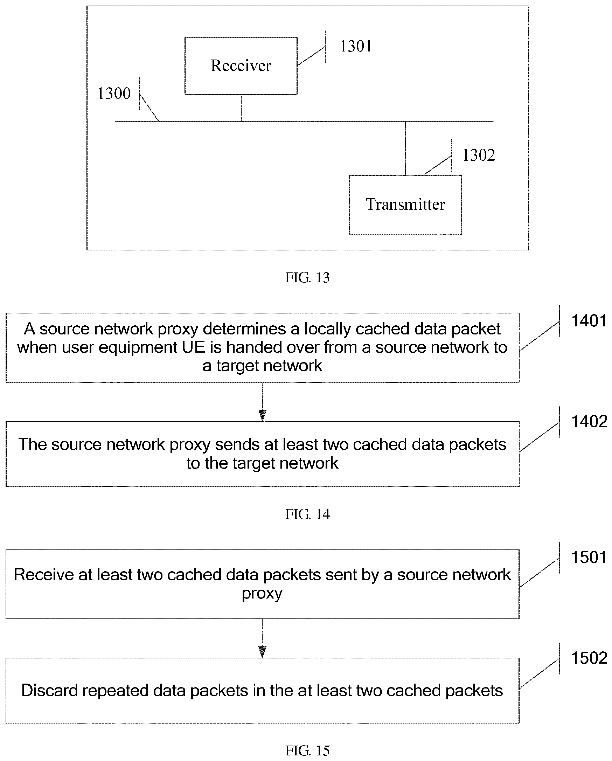

Referring to FIG. 13, based on a same invention concept, an embodiment of the present invention provides a data packet sending apparatus, where the apparatus is configured to hand over UE from a source network to a target network, there is a source network proxy in the source network includes, and a retransmission mechanism-based transfer protocol is applied to both a connection between the UE and the source network proxy and a connection between the source network proxy and the server. The apparatus may include a receiver 1301 and a transmitter 1302 that are connected to a same bus 1300. The receiver 1301 is configured to: when the UE is handed over from the source network to the target network, receive a cached data packet sent by the source network proxy. The transmitter 1302 is configured to send a resending request to the source network proxy if there is a lost cached data packet, and the resending request is used to instruct the source network proxy to resend the lost cached data packet. The apparatus may refer to the UE, or the apparatus may refer to a target network proxy in the target network.

Optionally, in this embodiment of the present invention, the apparatus may further include a memory 1303 and a processor 1304 that are connected to the bus 1300. The memory 1303 is configured to store an instruction required by the processor 1304 for executing a program. The processor 1304 is configured to read the instruction stored in the memory 1303 to perform the following method: determining whether there is a lost cached data packet. The transmitter 1302 is configured to send the resending request to the source network proxy if the processor 1304 determines that there is a lost cached data packet.

Optionally, in this embodiment of the present invention, the processor 1304 is specifically configured to: execute the instruction, and determine, according to sequence numbers that are in the retransmission mechanism-based transfer protocol and that are separately corresponding to cached data packets, whether there is a lost cached data packet.

Optionally, in this embodiment of the present invention, if the apparatus is the target network proxy in the target network, the transmitter 1302 is further configured to: after the processor 1304 determines whether there is a lost cached data packet, send an acknowledgement response to the source network proxy if there is no lost cached data packet.

Optionally, in this embodiment of the present invention, if the apparatus is the target network proxy in the target network, the transmitter 1302 is further configured to: after the processor 1304 determines whether there is a lost cached data packet, send the received cached data packet to the UE if there is no lost cached data packet.

Optionally, in this embodiment of the present invention, if the apparatus is the UE, the transmitter 1302 is further configured to: send an acknowledgement response to the source network proxy after the receiver 1301 receives the cached data packet sent by the source network proxy, or after the processor 1304 determines that there is no lost cached data packet.

Referring to FIG. 14, an embodiment of the present invention provides a data packet sending method, where the method is used for handing over user equipment UE from a source network to a target network, there is a source network proxy in the source network, and a retransmission mechanism-based transfer protocol is applied to both a connection between the UE and the source network proxy and a connection between the source network proxy and the server. A main procedure of the method is described as follows.

Step 1401: The source network proxy determines a locally cached data packet when the user equipment UE is handed over from the source network to the target network.

When the UE works in the source network, some data is cached in the source network proxy within a particular time when a speed of transmitting data between the server and the source network proxy is higher than a speed of transmitting data between the source network proxy and the UE.

Therefore, when the UE is handed over from the source network to the target network, the source network proxy needs to send cached data to the UE. In this embodiment of the present invention, these data packets are referred to as a cached data packet.

Step 1402: The source network proxy sends at least two cached data packets to the target network.

Optionally, in this embodiment of the present invention, that the source network proxy sends at least two cached data packets to the target network may include: obtaining, by the source network proxy, the at least two cached data packets by processing the cached data packet, and sending, by the source network proxy, the at least two data packets to the target network; or sending, by the source network proxy, the cached data packet to the target network at least twice, so as to send the at least two cached data packets to the target network.

That is, the source network proxy may send the at least two cached data packets to the target network by using different methods. For example, the source network proxy may replicate the locally cached data packet to obtain the at least two cached data packets, and then send the at least two cached data packets to the target network. Alternatively, for example, the source network proxy may send the cached data packet to the target network at least twice, so that in a case of no packet loss, the target network can receive one cached data packet each time, that is, the target network can receive the at least two cached data packets.

No matter which sending method is used, a purpose is to enable the target network to receive the cached data packet and a backup. In this way, even if a data packet is lost in a transmission process, because the backup is sent, a possibility of a case in which information received by the target network is incomplete is reduced.

Optionally, in this embodiment of the present invention, that the source network proxy sends at least two cached data packets to the target network may include: sending, by the source network proxy, the at least two cached data packets to a target network proxy; or sending, by the source network proxy, the at least two cached data packets to the target RAN.

Optionally, in this embodiment of the present invention, if the source network proxy sends the at least two cached data packets to the target network proxy, the target network proxy may send the at least two cached data packets to the UE, and after receiving the at least two cached data packets, the UE may discard repeated data packets in the at least two cached data packets, so as to avoid data redundancy and save storage space of the UE. Alternatively, after receiving the at least two data packets, the target network proxy may discard repeated data packets in the at least two cached data packets, and then send a remaining cached data packet to the UE, so that the UE itself does not need to perform an operation, and the UE can directly use the cached data packet after receiving the cached data packet.

Optionally, in this embodiment of the present invention, if the source network proxy sends the at least two cached data packets to the target RAN, the target RAN may send the at least two cached data packets to the UE, and after receiving the at least two cached data packets, the UE may discard repeated data packets in the at least two cached data packets, so as to avoid data redundancy and save storage space of the UE.

That is, in this embodiment, there may be a network proxy in the target network, or there may be no network proxy in the target network.

In this embodiment of the present invention, the target RAN is an eNodeB, an RNC, or a BSC.

Referring to FIG. 15, based on a same invention concept, an embodiment of the present invention provides a data processing method, where the method is used for handing over UE from a source network to a target network, there is a source network proxy in the source network, and a retransmission mechanism-based transfer protocol is applied to both a connection between the UE and the source network proxy and a connection between the source network proxy and the server. A main procedure of the method is described as follows. A functional entity implementing the embodiment of FIG. 15 may be a target network proxy in the target network, or may be the UE, or the like.

Step 1501: Receive at least two cached data packets sent by the source network proxy.

This step may mean that the target network proxy receives the at least two cached data packets sent by the source network proxy, or may mean that the UE receives the at least two cached data packets sent by the target network proxy, or may mean that the UE receives the at least two cached data packets sent by the target RAN.

Step 1502: Discard repeated data packets in the at least two cached data packets.

If step 1501 specifically means that the target network proxy receives the at least two cached data packets sent by the source network proxy, step 1502 specifically means that the target network proxy discards the repeated data packets in the at least two cached data packets. That is, in this case, it is the target network proxy that discards the repeated data packets.

If step 1501 specifically means that the UE receives the at least two cached data packets sent by the target network proxy, or means that the UE receives the at least two cached data packets sent by the target RAN, step 1502 means that the UE discards the repeated packets in the at least two cached data packets. If step 1501 specifically means that the UE receives the at least two cached data packets sent by the target network proxy, in this case, the target network proxy does not process the repeated packets, and it is the UE that discards the repeated data packets.

Optionally, in this embodiment of the present invention, the discarding repeated data packets in the at least two cached data packets may include: determining the repeated data packets in the at least two cached data packets, and discarding the repeated data packets.

Optionally, in this embodiment of the present invention, after the discarding repeated data packets in the at least two cached data packets, the method further includes: sending a remaining cached data packet to the UE, which means that if it is the target network proxy that discards the repeated data packets in the at least two cached data packets, the target network proxy further needs to send a processed cached data packet to the UE.

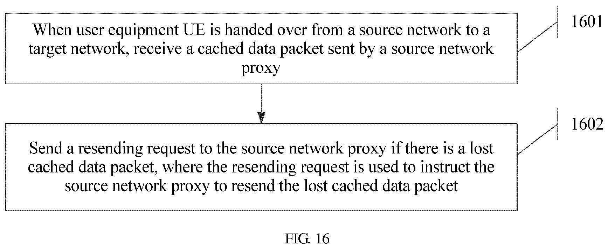

Referring to FIG. 16, an embodiment of the present invention provides another data packet sending method, where the method is used for handing over UE from a source network to a target network, there is a source network proxy in the source network, and a retransmission mechanism-based transfer protocol is applied to both a connection between the UE and the source network proxy and a connection between the source network proxy and the server. A main procedure of the method is described as follows. If there is a target network proxy in the target network to which the UE is handed over, steps in the embodiment of FIG. 16 may be implemented by the target network proxy. If there is no target network proxy but only a target RAN in the target network to which the UE is handed over, steps in the embodiment of FIG. 16 may be implemented by the UE.

Step 1601: When the user equipment UE is handed over from the source network to the target network, receive a cached data packet sent by the source network proxy.

The source network proxy sends a locally cached data packet to the target network when the UE is handed over from the source network to the target network. Similarly, the source network proxy may send the locally cached data packet to the target network proxy; or in a case in which there is no target network proxy in the target network, the source network proxy may send the locally cached data packet to the target RAN, and the target RAN directly sends the received data packet to the UE, which is equivalent to that the UE receives the cached data packet sent by the source network proxy.

Step 1602: Send a resending request to the source network proxy if there is a lost cached data packet, where the resending request is used to instruct the source network proxy to resend the lost cached data packet.

Optionally, in this embodiment of the present invention, the sending a resending request to the source network proxy if there is a lost cached data packet may include: determining whether there is a lost cached data packet, and send the resending request to the source network proxy if there is a lost cached data packet.

If there is the target network proxy in the target network, the target network proxy determines whether there is a lost cached data packet. If there is no target network proxy in the target network, the UE determines whether there is a lost cached data packet.

Optionally, in this embodiment of the present invention, the determining whether there is a lost cached data packet may include: determining, according to sequence numbers that are in the retransmission mechanism-based transfer protocol and that are separately corresponding to cached data packets, whether there is a lost cached data packet.

A specific process of performing determining according to the sequence number in the retransmission mechanism-based transfer protocol has been introduced in the embodiment of FIG. 2, and details are not described herein again.

Optionally, in this embodiment of the present invention, after the determining whether there is a lost cached data packet, the method may further include: sending an acknowledgement response to the source network proxy if there is no lost cached data packet, which means that if a network entity implementing steps in the embodiment of FIG. 16 is the target network proxy, the target network proxy may send the acknowledgement response to the source network proxy when determining that there is no lost cached data packet, so as to notify the source network proxy that an entire sending procedure may be ended.

Optionally, in this embodiment of the present invention, after the determining whether there is a lost cached data packet, the method may further include: sending the received cached data packet to the UE if there is no cached data packet, which means that if a network entity implementing steps in the embodiment of FIG. 16 is the target network proxy, the target network proxy may send the received cached data packet to the UE when determining that there is no lost cached data packet.

In this embodiment of the present invention, if the network entity implementing steps in the embodiment of FIG. 16 is the target network proxy, the target network proxy sends the acknowledgement response to the source network proxy, and the target network proxy sends the received cached data packet to the UE. The two steps may be performed in any sequence.

Optionally, in this embodiment of the present invention, after the receiving a cached data packet sent by the source network proxy, or after it is determined that there is no lost cached data packet, the method further includes: sending an acknowledgement response to the source network proxy, which means that if the network entity implementing steps in the embodiment of FIG. 16 is the UE, the UE may send the acknowledgement response to the source network proxy when determining that there is no lost cached data packet, or the UE may send the acknowledgement response to the source network proxy after receiving the cached data packet sent by the source network proxy.

If the network entity implementing the embodiment of FIG. 16 is the UE, when sending, to the source network proxy, an acknowledgement response message and a message for requesting resending of a cached data packet, the UE performs forwarding by using the target RAN or the target network proxy.

The data packet sending apparatus in embodiments of the present invention is configured to hand over user equipment UE from a source network to a target network. The apparatus is in the source network, and a retransmission mechanism-based transfer protocol is applied to both a connection between the UE and the apparatus and a connection between the apparatus and the server. The apparatus may include: a determining module, configured to determine a locally cached data packet when the UE is handed over from the source network to the target network; and a sending module, configured to send at least two cached data packets to the target network.

In the embodiments of the present invention, when sending a cached data packet to the target network, a source network proxy sends at least two cached data packets to the target network, which increases a sending quantity, that is, a case in which a data packet may be lost is fully considered, so as to ensure as much as possible that the target network receives all data packets. In this way, a case in which the target network requests the server to retransmit data is avoided as much as possible. For example, if the retransmission mechanism-based transfer protocol is a TCP/IP protocol, a TCP disconnection is avoided as much as possible, so as to ensure service transmission continuity.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely used to describe in detail the technical solutions of the present application. The descriptions of the foregoing embodiments are merely intended to help understand the method and core idea of the present invention, and shall not be construed as a limitation to the present invention. Any variation or replacement readily figured out by a person skilled in the art within the technical scope disclosed in the present invention shall fall within the protection scope of the present invention.

## Claims

1. A data packet sending apparatus, wherein the apparatus is configured to hand over a user equipment, UE, from a source network to a target network, wherein the apparatus is in the source network, wherein the apparatus comprises:
• a determining module (201), configured to determine a locally cached data packet when the UE is handed over from the source network to the target network; and
• a sending module (202), configured to:
∘ in a first alternative, obtain at least two cached data packets by replicating the locally cached data packet and send the at least two cached data packets to the target network or,
∘ in a second alternative instead of the first alternative, send the locally cached data packet to the target network at least twice, so as to send the at least two cached data packets to the target network.

2. The apparatus according to claim 1, wherein the sending module (202) is specifically configured to: send the at least two cached data packets to a target network proxy, or send the at least two cached data packets to a target radio access network RAN.

3. A data packet sending method performed by a data packet sending apparatus in a source network, wherein the method is used for handing over an UE from the source network to a target network, the method comprises:
• determining a locally cached data packet when the UE is handed over from the source network to the target network (step 1401);
• in a first alternative, obtaining at least two cached data packets by replicating the locally cached data packet and sending the at least two cached data packets to the target network or,
• in a second alternative instead of the first alternative, sending the locally cached data packet to the target network at least twice, so as to send the at least two cached data packets to the target network (step 1402).

## Patentansprüche

1. Datenpaketsendevorrichtung, wobei die Vorrichtung ausgelegt ist zum Übergeben eines Benutzergeräts bzw. UE von einem Quellnetzwerk zu einem Zielnetzwerk, wobei sich die Vorrichtung im Quellnetzwerk befindet, wobei die Vorrichtung Folgendes umfasst:
• ein Bestimmungsmodul (201), das ausgelegt ist zum Bestimmen eines lokal gecachten Datenpakets, wenn das UE vom Quellnetzwerk zum Zielnetzwerk übergeben wird; und
• ein Sendemodul (202), das zu Folgendem ausgelegt ist:
∘ in einer ersten Alternative, Erhalten von mindestens zwei gecachten Datenpaketen, indem das lokal gecachte Datenpaket repliziert wird, und Senden der mindestens zwei gecachten Datenpakete zum Ziel netzwerk, oder,
∘ in einer zweiten Alternative anstelle der ersten Alternative, Senden des lokal gecachten Datenpakets zum Zielnetzwerk mindestens zwei Mal, damit die mindestens zwei gecachten Datenpakete zum Zielnetzwerk gesendet werden.

2. Vorrichtung nach Anspruch 1, wobei das Sendemodul (202) spezifisch zu Folgendem ausgelegt ist: Senden der mindestens zwei gecachten Datenpakete zu einem Zielnetzwerk-Proxy oder Senden der mindestens zwei gecachten Datenpakete zu einem Zielfunkzugangsnetz bzw. Ziel-RAN.

3. Datenpaketsendeverfahren, das durch eine Datenpaketsendevorrichtung in einem Quellnetzwerk durchgeführt wird, wobei das Verfahren zum Übergeben eines UE vom Quellnetzwerk zu einem Zielnetzwerk verwendet wird, wobei das Verfahren Folgendes umfasst:
• Bestimmen eines lokal gecachten Datenpakets, wenn das UE vom Quellnetzwerk zum Zielnetzwerk übergeben wird (Schritt 1401);
• in einer ersten Alternative, Erhalten von mindestens zwei gecachten Datenpaketen, indem das lokal gecachte Datenpaket repliziert wird, und Senden der mindestens zwei gecachten Datenpakete zum Ziel netzwerk, oder,
• in einer zweiten Alternative anstelle der ersten Alternative, Senden des lokal gecachten Datenpakets zum Zielnetzwerk mindestens zwei Mal, damit die mindestens zwei gecachten Datenpakete zum Zielnetzwerk gesendet werden (Schritt 1402).

## Revendications

1. Appareil d'envoi de paquets de données, l'appareil étant conçu pour transférer un équipement utilisateur, UE, d'un réseau source à un réseau cible, l'appareil se trouvant dans le réseau source, dans lequel l'appareil comprend :
. un module de détermination (201), conçu pour déterminer un paquet de données mis en mémoire cache localement lorsque l'UE est transféré du réseau source au réseau cible ; et
un module d'envoi (202), conçu pour :
. dans une première alternative, obtenir au moins deux paquets de données mis en mémoire cache par réplication du paquet de données mis en mémoire cache localement et envoyer les au moins deux paquets de données mis en mémoire cache au réseau cible ou,
. dans une seconde alternative, à la place de la première alternative, envoyer le paquet de données mis en mémoire cache localement au réseau cible au moins deux fois, de façon à envoyer les au moins deux paquets de données mis en mémoire cache au réseau cible.

2. Appareil selon la revendication 1, dans lequel le module d'envoi (202) est conçu spécifiquement pour : envoyer les au moins deux paquets de données mis en mémoire cache à un mandataire de réseau cible, ou envoyer les au moins deux paquets de données mis en mémoire cache à un réseau d'accès radio RAN cible.

3. Procédé d'envoi de paquets de données mis en oeuvre par un appareil d'envoi de paquets de données dans un réseau source, le procédé étant utilisé pour transférer un UE du réseau source à un réseau cible, le procédé consistant à :
. déterminer un paquet de données mis en mémoire cache localement lorsque l'UE est transféré du réseau source au réseau cible (étape 1401) ;
. dans une première alternative, obtenir au moins deux paquets de données mis en mémoire cache par réplication du paquet de données mis en mémoire cache localement et envoyer les au moins deux paquets de données mis en mémoire cache au réseau cible ou,
. dans une seconde alternative, à la place de la première alternative, envoyer le paquet de données mis en mémoire cache localement au réseau cible au moins deux fois, de façon à envoyer les au moins deux paquets de données mis en mémoire cache au réseau cible (étape 1402).
